Europäisches Patentamt

European Patent Office

Office européen des brevets

(11) Publication number: **0 225 125 B1**

# EUROPEAN PATENT SPECIFICATION

(45) Date of publication of patent specification: **22.04.92**  (51) Int. Cl.⁵: **C08J 5/12**

(21) Application number: **86309072.6**

(22) Date of filing: **20.11.86**

The file contains technical information submitted after the application was filed and not included in this specification

(54) **Method of bonding silicone rubber to metal.**

(30) Priority: **21.11.85 US 800557**

(43) Date of publication of application:
**10.06.87 Bulletin  87/24**

(45) Publication of the grant of the patent:
**22.04.92 Bulletin  92/17**

(84) Designated Contracting States:
**BE DE ES FR GB IT NL SE**

(56) References cited:
**DE-C- 819 190          FR-A- 1 010 260**
**FR-A- 2 346 422          GB-A- 577 702**
**US-A- 3 754 967          US-A- 4 169 185**

(73) Proprietor: **JMK International Inc.**
**4800 Bryant Irvin Court**
**Fort Worth Texas 76107(US)**

(72) Inventor: **Gibbon, Robert Muir**
**7728 Incline Terrace**
**Fort Worth Texas 76179(US)**

(74) Representative: **Dummett, Thomas Ian Peter**
**et al**
**Dummett Copp & Co. 14 The Square**
**Martlesham Heath Ipswich Suffolk, IP5**
**7SL(GB)**

## Description

Field of the Invention.

The present invention relates to a method for achieving superior bonds between synthetic elastomers and ferrous metals and, specifically, to a method for achieving a superior bond between silicone rubber compositions and ferrous metals.

Description of the Prior Art

Various techniques are known in the art for adhering silicone rubber to ferrous metal surfaces. The normal technique for adhering silicone rubber to a ferrous metal member is to subject the metal member to a phosphating treating prior to priming the metal member and contacting the member with the silicone rubber, see for example US Patent No 4,169,185 A. The phosphating technique involves one or more hot alkali dip and rinse cycles, followed by a phosphate dip and rinse cycle. Good bonds can be obtained if the phosphate level is correct. However, if the phosphate concentration in the phosphate dip is too low or too high, poor bonds result.

Another prior art technique for preparing metal surfaces for bonding to silicone rubbers is sand blasting, see for example US Patent No 3,639,135 A. Using this technique, the metal surface is silica sand blasted to remove scale, corrosion, and other foreign matter. The sand blasting technique is a cleaner process than phosphating but results in bonds of variable quality. The process is also labour intensive.

It has also been proposed to subject the surface of the metal to treatment with a chemical, see for example US Patent No 3,754,967 A where the metal was treated with a solution of a salt; or to steam cleaning in the case of brass plated ferrous metals, see for example British Patent No 577,702 A. However, such treatments are labour intensive and expensive.

It has been proposed to treat aluminium to form an oxide thereon before a silicone coating was applied, see for example German Patent No 819,190 C, and to pre-heat freshly exposed surfaces of aluminium to at least 250°C prior to coating them with a silicone rubber, see for example French Patent No 2,346,422 A. However, it is stated in French Patent No 1,010,260 A that any oxide layer must be removed in the case of copper.

There exists a need for a method for forming an improved bond between silicone rubber and ferrous metal surfaces which produces reliable bonds, which is not labour intensive, and which is an easy and clean process.

## SUMMARY OF THE INVENTION

The present invention provides a method for bonding a silicone rubber to a ferrous metal member, which method comprises the steps of:

a. first heating the ferrous metal member in the presence of oxygen to a temperature and for a time sufficient to form an oxide layer on the surface of the metal member; and

b. applying an uncured silicone rubber composition to the treated ferrous metal member and curing the silicone rubber composition in situ so as to bond the silicone rubber composition to the metal member.

The invention can be applied to a wide range of ferrous metals which are capable of being oxidised by heating in oxygen, for example a mild steel. Preferably, the heat treatment is carried out by heating the metal in air.

The metal member can be of any suitable form and shape, for example a planar sheet or a more complex member. However, the invention is of especial application in the production of silicone rubber gaskets incorporating a ferrous metal reinforcing member bonded to the silicone rubber. For convenience, the invention will be described hereinafter in terms of the production of such gaskets.

The metal members are first treated by heating in oxygen at a temperature and for a time sufficient to form an oxide layer on the metal. Thus, the member is preferably heated in air, eg. in an atmospheric oven, to a temperature in the range from 177 to 315°C, notably from about 260°C to 315°C. Preferably, the heating is carried out for sufficiently long a time to produce a blue colouration to the surface of the ferrous metal member. This colouration provides a simple characteristic visual indication of when the desired oxide layer has been formed.

The treated ferrous metal member is preferably allowed to cool to room temperature and an uncured or partially cured silicone rubber composition applied thereto. It is preferred to apply a primer composition to the treated metal member prior to application of the silicone rubber composition. Thereafter, the silicone rubber composition is cured to bond the treated and primed ferrous metal member to the silicone rubber composition and form a reinforced gasket of the desired shape.

BRIEF DESCRIPTION OF THE DRAWINGS

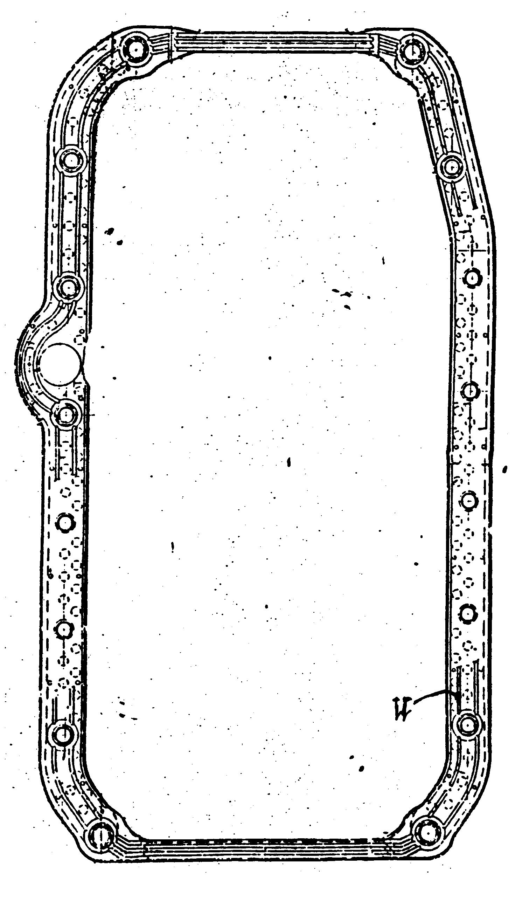

Figure 1 is a top perspective view of a silicone rubber gasket having ferrous metal reinforcing rails embedded therein and bonded to the silicone rubber by the method of the invention.

DETAILED DESCRIPTION OF THE INVENTION

In the method of the invention, the ferrous metal member to be bonded to the silicone rubber is first treated by heating the metal member in the presence of oxygen to form an oxide layer on its surface. When a bright piece of steel or other ferrous metal, such as results from machining or polishing, is heated in air, it will oxidise, forming a thin surface oxide film. With ferrous metals, this oxide film has a characteristic colour, or "temper colour", depending the thickness of the film. The thickness of the layer will vary largely with the temperature to which the metal is heated and, to a lesser extent, with the time for which it is held at that temperature.

The following relationships between oxide layer colours and specified temperatures in a 95% plain carbon steel have been observed:

| Colours (First Order) | Approximate Temp. |
|---|---|
| Yellow | 193°C |
| Straw | 216°C |
| Brown | 238°C |
| Purple | 260°C |
| Blue | 304°C |
| "Tempering", Metals Engineering Institute, American Society for Metals, page 10, 1977. | |

It should be noted that the above colours progress through the colour range not only because of increasing temperature but also with the passage of time. Thus, if a piece of steel formed the yellow oxide at 193°C, continued holding at this temperature would result in a progressive colour change to straw, brown, purple, and finally blue as the oxide layer thickens.

In the process of the invention using a mild steel member, a satisfactory oxide film will usually be obtained by heating the member to a temperature in the range 204°C to 316°C for from 10 to 20 minutes. However, for other ferrous metals satisfactory film formation may occur at different temperatures and over different heating periods. As a general guide the heating is carried out until the surface colouration of the member shows a change which is visually distinctive and characteristic of the formation of an oxide layer. The optimum temperature and heating period can be readily determined by simple trial and error in each case.

For purposes of forming the gasket shown in Fig. 1, side rails 11 were first formed from cold-rolled steel. The rails were then cut into lengths of about 350-375 mm (14-15 inches). After degreasing, specimen side rails were heated in a recirculating atmospheric oven, with the following results:

| Temperature | Result |
|---|---|
| 316°C | Heating for 10-15 min. produced a blue colour indicating a receptive surface. |
| 260°C | Heating for 1½-2½ hours produced a blue colour indicating a receptive surface. |
| 204°C | Heating for 7-8 hours produced a light brown colour indicating a receptive surface. |

The rails are preferably heated at about 304°C for about 10 to 15 minutes to produce a blue colouration to the surface which is visually distinguishable and is characteristic of the formation of a receptive oxide layer on the outer surface of the metal rails.

After heating to the desired extent, the metal member is preferably cooled to ambient temperature for application of the silicone rubber composition. As indicated above, it is preferred to apply an elastomeric primer to the metal before the silicone rubber is applied. Suitable primers include alkyl and alkoxy silanes and siloxanes and suitable materials are available commercially. A particularly preferred primer is commer-

EP 0 225 125 B1

cially available from Lord Corporation, Chemical Products Group, 2000 West Grandview Blvd., Erie, Pennsylvania, under the Registered Trade Mark "Chemlok 608." Chemlok is described as a silane elastomer adhesive having a density of approximately 0.863 kg per litre, having a flash point of 3.33°C and a boiling range of 3.33 to 61°C. The primer is preferably sprayed on the metal members using conventional techniques.

Following the priming step, the metal member is contacted with a uncured silicone rubber composition. The silicone rubber composition is preferably blended from an organopolysiloxane elastomer and can included filler materials, processing aids, heat stablizers, curing catalysts, and the like. Silicone rubber compositions of the above type are well known and can be prepared by standard methods known in the art. Descriptions of the preparation of such compositions can be found, for example, in: Eaborn, C., Organosilicone Compounds, Academic Press, New York, 1960; McGregor, R.R., Silicones and Their Uses, McGraw-Hill Book Company, New York, 1954; Meals, R.N., and F.M. Lewis, Silicones, Reinhold Publishing Corp., New York, 1959; Montermosom J.C., "Silicone Rubbers", Chapter 16, in Morton, E.D., Introduction to Rubber Technology, Reinhold Publishing Corp., New York, 1959; Rochow, E.G., An Introduction to the Chemistry of Silicones, Second Edition, John Wiley and Sons, New York, 1951.

The silicone rubber composition applied to the metal member contains a curing agent, notably of the peroxide type. Typical curing agents include 2,4 dichlorobenzoyl peroxide and dicumyl peroxide and these are present in conventional amounts.

A preferred silicone rubber composition comprises 100 parts by weight of dimethylvinylsiloxy-ended polydiorganosiloxane gum having as a percentage of all organic radicals in the gum, 99.85% by weight methyl radicals and 0.15% by weight vinyl radicals; 7 parts by weight hydroxyl-ended polydimethylsiloxane having about 3.0 weight percent silicon bonded hydroxyl; 30 parts by weight fumed silica filler having a surface area of 300 $m^2$/g; and 0.8 parts by weight of 2,5-dimethyl-2,5(t-butylperoxy) hexane.

In addition to the above described ingredients, the silicone rubber compositions for present use can contain heat stability additives, compression set additives, additives to improve handling properties, dyes or colouring additives, additives to prevent crepe aging and other additives conventionally found in heat cured silicone elastomers.

The silicone rubber compositions for present use are conveniently made by mixing the various components together. The order of adding the elastomer, filler and additional additives is not critical. Although the preferred method of mixing is to hot mix the ingredients of the rubber composition, it will be understood that the composition can also be cold mixed. The rubber composition is then cooled and the curing agent is added.

The uncured silicone rubber composition can be applied to the metal members by any suitable technique, eg. by coating the member with the required thickness of the composition.

However, it is especially preferred to incorporate the metal member as a reinforcing member within a moulded product formed from the silicone rubber. Thus, in the production of the gasket shown in Figure 1, the previously degreased, heat treated and primed metal rails are placed between the upper and lower platens of a mould having a mould cavity of the desired configuration for the gasket which is to be formed. The uncured silicon rubber composition is then injected into the mould cavity so that the uncured silicone rubber composition encases the metal rails. The silicone rubber composition is then heat cured in the mould to bond the cured silicone rubber composition to the rails and form a reinforced gasket of the desired shape. The temperature at which the rubber compositions are cured to the solid elastomeric state depends, as is known, upon the particular curing catalyst chosen, the duration of the cure, amount and type of filler, etc. For the preferred composition stated above, curing using moulding conditions of 171°C for 10 minutes is acceptable.

The present invention provides an improved bonding of the silicone rubber composition to the metal member using a simple non-labour intensive operating method which reduces many of the problems associated with other methods. The colouration of the metal surface during the heat treatment provides a simple visual indication of a receptive surface. The heat tinting process is less labour intensive than sand blasting and is also easier and cleaner than phosphating.

While the invention has been described above with specific reference to the production of metal reinforced gaskets, it is not limited to this application, but is susceptible to various changes and modifications without departing from the spirit thereof.

The process of the invention thus also provides a ferrous metal member having a silicone rubber bonded thereto in which the bonding is via an oxide layer on the surface of the metal member.

## Claims

1. A method for bonding a silicone rubber to a metal member, characterised in that it comprises:

a. heating a ferrous metal member in the presence of oxygen to a temperature and for a time sufficient to form an oxide layer on the surface of the ferrous metal member; and

b. applying an uncured silicone rubber composition to the treated ferrous metal member and curing the composition in situ so as to bond the ferrous metal member to the silicone rubber composition.

2. A method according to claim 1 characterised in that the ferrous metal member is heated in an atmospheric oven to a temperature and for a time sufficient to form an oxide layer on the surface of the ferrous metal member and the treated ferrous metal member is allowed to cool prior to application of the uncured silicone rubber composition.

3. A method according to either of claims 1 or 2 characterised in that the ferrous metal member provides the reinforcing member to a gasket formed from the silicone rubber.

4. A method according to any one of the preceding claims characterised in that a primer is applied to the ferrous metal member prior to application of the silicone rubber composition.

5. A method according to any one of the preceding claims characterised in that the heat treatment of the ferrous metal member is carried out at a temperature of from 204°C to 316°C for a period of from 10 to 20 minutes.

6. A method as claimed in any one of the preceding claims characterised in that the silicone rubber composition comprises a peroxide curable polydiorganosiloxane.

7. A method as claimed in any one of the preceding claims characterised in that the heat treatment of the ferrous metal member is carried out at from 260°C to 316°C and for a time sufficient to produce a blue colouration to the surface of the ferrous metal member which is visually distinguishable and which is characteristic of an oxide layer on the surface of the ferrous metal member.

8. A method of forming a ferrous metal member reinforced silicone rubber gasket characterised in that it comprises the steps of:

a. first, treating the ferrous metal member by heating it air to a temperature in the range of 260°C - 316°C for a time sufficient to produce a blue colouration in the outer surface of the ferrous metal member;

b. allowing the treated ferrous metal member to cool to room temperature;

c. applying a primer to the ferrous metal member;

d. placing the treated and primed ferrous metal member in a mould cavity of the desired configuration for the gasket which is to be formed;

e. injecting an uncured silicone rubber composition into the mould cavity so that it contacts the ferrous metal member; and

f. heat curing the silicone rubber composition in the mould to bond the ferrous metal member to the silicone rubber composition and form a reinforced gasket of the desired shape.

**Revendications**

1. Procédé pour lier un caoutchouc silicone à un organe métallique, caractérisé en ce qu'il comprend :

(a) le chauffage d'un organe en métal ferreux en présence d'oxygène jusqu'à une température et pendant une durée suffisantes pour former une couche d'oxyde à la surface de l'organe en métal ferreux, et

(b) l'application d'une composition de caoutchouc silicone non réticulée sur l'organe en métal ferreux traité et la réticulation de la composition in situ de façon à lier l'organe en métal ferreux à la composition de caoutchouc silicone.

2. Procédé suivant la revendication 1, caractérisé en ce que l'organe en métal ferreux est chauffé dans un four atmosphérique jusqu'à une température et pendant une durée suffisantes pour former une couche d'oxyde à la surface de l'organe en métal ferreux et l'organe en métal ferreux traite est mis à refroidir avant l'application de la composition de caoutchouc silicone non réticulée.

**3.** Procédé suivant la revendication 1 ou 2, caractérisé en ce que l'organe en métal ferreux constitue l'organe de renforcement pour un joint formé du caoutchouc silicone.

**4.** Procédé suivant l'une quelconque des revendications précédentes, caractérisé en ce qu'un agent d'ancrage est appliqué sur l'organe en métal ferreux avant l'application de la composition de caoutchouc silicone.

**5.** Procédé suivant l'une quelconque des revendications précédentes, caractérisé en ce que le traitement thermique de l'organe en métal ferreux est exécuté à une température de 204°C à 316°C pendant une durée de 10 à 20 minutes.

**6.** Procédé suivant l'une quelconque des revendications précédentes, caractérisé en ce que la composition de caoutchouc silicone comprend un polydiorganosiloxane réticulable par les peroxydes.

**7.** Procédé suivant l'une quelconque des revendications précédentes, caractérisé en ce que le traitement thermique de l'organe en métal, ferreux est exécuté de 260°C à 316°C et pendant une durée suffisante pour former à la surface de l'organe en métal ferreux une coloration bleue qui est visuellement discernable et qui est caractéristique d'une couche d'oxyde à la surface de l'organe en métal ferreux.

**8.** Procédé pour former un joint en caoutchouc silicone renforcé par un organe en métal ferreux, caractérisé en ce qu'il comprend les stades :

(a) en premier lieu, de traitement de l'organe en métal ferreux par chauffage de celui-ci dans l'air jusqu'à une température de l'intervalle de 260°C à 316°C pendant une durée suffisante pour former une coloration bleue à la surface extérieure de l'organe en métal ferreux;

(b) de mise de l'organe en métal ferreux traité à refroidir jusqu'à la température ambiante;

(c) d'application d'un agent d'ancrage sur l'organe en métal ferreux;

(d) d'insertion de l'organe en métal ferreux traité et portant l'agent d'ancrage dans une cavité de moule de la configuration souhaitée pour le joint qu'il faut former;

(e) d'injection d'une composition de caoutchouc silicone non réticulée dans la cavité de moule de façon qu'elle vienne en contact avec l'organe en métal ferreux, et

(f) de réticulation thermique de la composition de caoutchouc silicone dans le moule pour lier l'organe en métal ferreux à la composition de caoutchouc silicone et former un joint renforcé de la forme souhaitée.

**Patentansprüche**

**1.** Verfahren zum Verbinden von Silikongummi mit einem Metallteil,
dadurch gekennzeichnet,
daß es umfaßt:

a. Erhitzen eines eisenhaltigen Metallteils in Anwesenheit von Stickstoff bis auf eine Temperatur und für eine Zeit, die ausreichend sind zur Bildung einer Oxidschicht auf der Oberfläche des eisenhaltigen Metallteils; und

b. Aufbringen einer nicht vulkanisierten Silikongummi-Zusammensetzung auf das behandelte eisenhaltige Metallteil und Vulkanisieren der Zusammensetzung in situ derart, daß das eisenhaltige Metallteil mit der Silikongummi-Zusammensetzung verbunden wird.

**2.** Verfahren nach Anspruch 1,
dadurch gekennzeichnet,
daß das eisenhaltige Metallteil in einem atmosphärischen Ofen auf eine Temperatur und für eine Zeit erhitzt wird, die ausreichend sind, um eine Oxidschicht auf der Oberfläche des eisenhaltigen Metallteils zu bilden, wobei das behandelte eisenhaltige Metallteil vor Aufbringen der unvulkanisierten Silikongummi-Zusammensetzung abkühlen kann.

**3.** Verfahren nach einem der Ansprüche 1 oder 2,
dadurch gekennzeichnet,
daß das eisenhaltige Metallteil ein Verstärkungsteil für eine aus dem Silikongummi gebildete Dichtung bildet.

**4.** Verfahren nach einem der vorhergehenden Ansprüche,
dadurch gekennzeichnet,
daß vor der Aufbringung der Silikongummi-Zusammensetzung eine Grundierung auf das eisenhaltige Metallteil aufgebracht wird.

**5.** Verfahren nach einem der vorhergehenden Ansprüche,
dadurch gekenzeichnet,
daß die Wärmebehandlung des eisenhaltigen Metallteils bei einer Temperatur von 204°C bis 316°C für einen Zeitraum von 10 bis 20 Minuten erfolgt.

**6.** Verfahren nach einem der vorhergehenden Ansprüche,
dadurch gekennzeichnet,
daß die Silikongummi-Zusammensetzung ein durch Peroxid vulkanisierbares Polydiorganosiloxan umfaßt.

**7.** Verfahren nach einem der vorhergehenden Ansprüche,
dadurch gekennzeichnet,
daß die Wärmebehandlung des eisenhaltigen Metallteils bei von 260°C bis 316°C und für eine Zeit durchgeführt wird, die ausreicht, um eine Blaufärbung der Oberfläche des eisenhaltigen Metallteils zu erzeugen, welche sichtbar unterscheidbar ist und welche charakteristisch für eine Oxidschicht auf der Oberfläche des eisenhaltigen Metallteils ist.

**8.** Verfahren zur Bildung einer Silikongummi-Dichtung, die mit einem eisenhaltigen Metallteil verstärkt ist,
dadurch gekennzeichnet,
daß es die folgenden Schritte umfaßt:
a. zunächst die Behandlung des eisenhaltigen Metallteils durch dessen Aufheizen in Luft auf eine Temperatur im Bereich von 260°C bis 316°C für eine Zeit, die ausreicht, um eine Blaufärbung auf der äußeren Oberfläche des eisenhaltigen Metallteils zu erzeugen;
b. Zulassen, daß das behandelte eisenhaltige Metallteil bis auf Raumtemperatur abkühlt;
c. Aufbringen einer Grundierung auf das eisenhaltige Metallteil;
d. Einsetzen des behandelten und mit Grundierung versehenen eisenhaltigen Metallteils in einen Formhohlraum, der die gewünschte Konfiguration für die zu formende Dichtung aufweist;
e. Injizieren einer nicht vulkanisierten Silikongummi-Zusammensetzung in den Formhohlraum in der Weise, daß sie das eisenhaltige Metallteil berührt; und
f. Vulkanisieren der Silikongummi-Zusammensetzung in der Form durch Wärme zur Verbindung des eisenhaltigen Metallteils mit der Silikongummi-Zusammensetzung und zur Bildung einer verstärkten Dichtung von gewünschter Form.